(19) Europäisches Patentamt / European Patent Office / Office européen des brevets

(11) **EP 3 177 680 B1**

(12) **FASCICULE DE BREVET EUROPEEN**

(45) Date de publication et mention
de la délivrance du brevet:
**19.06.2019 Bulletin 2019/25**

(21) Numéro de dépôt: **15759893.9**

(22) Date de dépôt: **06.08.2015**

(51) Int Cl.:
*C08K 5/1535* (2006.01)    *C08J 3/18* (2006.01)
*C08L 91/00* (2006.01)    *C08L 27/06* (2006.01)
*C08K 5/103* (2006.01)

(86) Numéro de dépôt international:
**PCT/FR2015/052170**

(87) Numéro de publication internationale:
**WO 2016/020624 (11.02.2016 Gazette 2016/06)**

(54) **COMPOSITION PLASTIFIANTE LIQUIDE**

FLÜSSIGE WEICHMACHERZUSAMMENSETZUNG

LIQUID PLASTICIZER COMPOSITION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.08.2014 FR 1457674**

(43) Date de publication de la demande:
**14.06.2017 Bulletin 2017/24**

(73) Titulaire: **Roquette Frères
62136 Lestrem (FR)**

(72) Inventeur: **VERRAES, Arnaud
59136 Wavrin (FR)**

(74) Mandataire: **Cabinet Plasseraud
66, rue de la Chaussée d'Antin
75440 Paris Cedex 09 (FR)**

(56) Documents cités:
**WO-A1-2012/045988    DE-A1-102011 089 493
FR-A1- 2 990 210    FR-A1- 2 998 569
US-A1- 2009 301 348    US-B2- 8 507 596**

**Description**

**Domaine de l'invention**

L'invention a pour objet une composition plastifiante liquide à température ambiante. Un autre aspect de l'invention porte sur l'utilisation de cette composition pour la plastification de polymères.

**Etat de la technique**

Du fait de leurs nombreux avantages, l'utilisation de polymères synthétiques s'est généralisée dans de nombreuses applications depuis le siècle dernier.

Cependant, ces polymères peuvent présenter des inconvénients et certaines limites, comme en particulier, leurs propriétés mécaniques qui peuvent être insuffisantes pour certaines utilisations. Par exemple, ils peuvent présenter un allongement à la rupture très faible à température ambiante ou être peu résistants au choc.

De plus, il peut être nécessaire de modifier le comportement en phase fondue de ces polymères, notamment pour pouvoir les mettre en oeuvre dans des procédés de transformation de type enduction ou encore en calandrage. En d'autres termes, il est nécessaire que le polymère ait dépassé sa température de fusion, ou encore sa température de gélification, et qu'ainsi le polymère présente, dans cet état fondu ou gélifié, une viscosité adaptée au procédé de mise en forme pour pouvoir être correctement transformé.

Pour pouvoir les utiliser dans des applications plus variées, il est également nécessaire de modifier les propriétés de ces polymères, par exemple pour les rendre plus souples, plus résistants aux chocs ou encore leur permettre d'avoir un aspect plus doux.

Pour ceci, ces polymères peuvent être mélangés avec des « plastifiants ».

Par « plastifiant », on entend tout produit qui, lorsqu'il est mélangé en quantité suffisante avec un polymère, a pour fonction de diminuer la température de transition vitreuse dudit polymère.

En diminuant la température de transition vitreuse du polymère, la souplesse de ce dernier est augmentée et les propriétés mécaniques de ce polymère plastifié sont modifiées. Ainsi, en ajoutant un plastifiant à une composition de polymère, on observe généralement une diminution du module, notamment du module à 100% d'allongement, une diminution de la contrainte à la rupture et/ou une augmentation de la déformation à la rupture.

Ces propriétés modifiées du polymère lui permettent alors d'être utilisé dans des applications plus variées, par exemple pour la fabrication de films ou de feuilles souples.

Lors du procédé de mise en oeuvre de la matière plastique, les plastifiants sont généralement mélangés au polymère, ce qui permet la diminution de la température de ramollissement du polymère.

Ce mélange peut se faire par différents procédés de mise en oeuvre.

Dans le cas des polychlorures de vinyle (PVC) par exemple, le polymère peut être transformé en objet par différentes techniques de transformation des matériaux thermoplastiques, et en particulier par extrusion, par calandrage ou encore par enduction via un procédé de type plastisol.

Afin d'obtenir ce mélange thermoplastique, on mélange le PVC avec le plastifiant en apportant à ce système de l'énergie, sous forme de température et d'énergie mécanique. Dans le cas de l'extrusion, ce mélange se fait dans un système fermé. Dans le cas d'un mélange sur cylindres, ce mélange se fait dans un système ouvert. Le polymère peut être ensuite mis en forme, par exemple par des procédés de thermoformage ou de calandrage. Généralement, on réalise une étape de mélange à sec (en anglais *dry blend*) avant l'étape de mélange thermomécanique.

Selon le procédé plastisol, on réalise généralement un mélange pour former une pâte de PVC, puis cette pâte est mise en forme par une étape d'enduction ou de moulage, et la pâte est ensuite chauffée dans un four pour former la pièce.

Quel que soit le procédé, il faut que le polymère soit correctement fondu ou gélifié pour pouvoir former de manière satisfaisante l'objet obtenu à la fin du procédé.

Pour des raisons de facilité de stockage, d'utilisation et de dosage du plastifiant, on utilise généralement des plastifiants liquides à température ambiante.

Pour tous ces procédés d'obtention de mélanges thermoplastiques à partir de PVC, on utilise encore très souvent des plastifiants de la famille des esters phtaliques. Il s'agit encore à ce jour très généralement de phtalate de dioctyle ou de phtalate de diisononyle. Ces plastifiants sont très efficaces pour la plastification de polymères, et sont facilement disponibles sur le marché, pour un coût relativement faible.

Cependant, du fait des problèmes de toxicité des phtalates, d'autres plastifiants ont également été développés ces dernières années, comme l'acide polycarboxylique cyclohexane et ses dérivés, qui ont fait l'objet des demandes de brevet WO 00/78853 et WO 99/32427. A titre d'exemple, on peut citer l'ester de diisononyle d'acide dicarboxylique 1,2-cyclohexane (DINCH) commercialisé par BASF sous la marque Hexamoll®.

Comme autre plastifiant, on peut également citer les dérivés esters de glycérol, tel que le Grindsted® SOFT-N-SAFE obtenu à partir de glycérol et d'huile de ricin et commercialisé par la société Danisco. Ces plastifiants présentent l'avantage d'être obtenus à partir de produits biosourcés.

L'utilisation de dérivés de 1,4 :3,6 dianhydrohexitols comme plastifiants de polymères a déjà été décrite dans le document WO 99/45060. Ces dérivés ne présentent pas les problèmes de toxicité des phtalates. Ces plastifiants présentent en outre l'avantage d'être partiellement biosourcés, voire totalement biosourcés. Dans cette demande sont décrits dans les exemples les plastifiants liquides à température ambiante suivants : le dioctanoate d'isosorbide, le dibutanoate d'isosorbide, le dihexanoate d'isosorbide et le di(2-ethylhexanoate) d'isosorbide. Ces plastifiants sont également décrits dans le document WO 2008/095571 A1, qui décrit des diesters aliphatiques à 9 atomes de carbone. Le document *Préparation of plasticizers from carbohydrate sources. I. Levulinic acid esters. II. Sorbide esters,* (Hachihama et al., Technology reports of the Osaka University, Vol. 3, n°72, 1953, pages 191-200) décrit quant à lui des esters aliphatiques à 8 atomes de carbone ainsi que des esters aliphatiques à 10 atomes de carbone. Le brevet US 2387842 A décrit quant à lui des diesters aliphatiques mixtes, ceux-ci étant également utiles comme plastifiants. Des mélanges de ce type d'esters sont également décrits dans les demandes WO2014080151 A1 et WO2014080152 A1, qui sont susceptibles d'être obtenus à partir de 1,4 :3,6 dianhydrohexitols et de mélanges d'acides gras.

Les propriétés mécaniques des polymères plastifiés avec ces dérivés sont excellentes, proches de celles obtenues avec les plastifiants de type phtalates.

Dans le cadre de ses recherches, la Société Demanderesse a cependant constaté que ces esters de dianhydrohexitols présentent une température de congélation qui peut être proche, voire très proche de la température ambiante, ou encore même supérieure à la température ambiante comme c'est le cas des décanoates d'isosorbide. Il en est de même de la température de fusion. Ceci pose des problèmes de stockage et de manipulation de ces esters de dianhydrohexitols. De manière générale, il est avantageux d'obtenir des compositions présentant des températures de congélation et de fusion les plus basses possibles.

Par ailleurs, la Société Demanderesse a pu constater que, après avoir été mélangés avec le polymère, ces esters de dianhydrohexitols pouvaient avoir tendance à « migrer » hors de l'objet formé à partir de la matière plastique. Ce phénomène est généralement défini comme la tendance des plastifiants à migrer des plastiques dans lesquels ils ont été incorporés vers d'autres matières, plastiques ou autres, placées en contact étroit. Or, la migration du plastifiant peut avoir comme conséquences une perte au cours du temps de propriétés mécaniques et/ou optiques du polymère, une dégradation de l'aspect et du toucher, voire poser des problèmes de défaut d'impression lorsque l'on souhaite imprimer dans un second temps la surface du polymère. Après avoir été transformé en produit fini, le polymère plastifié peut rentrer en contact avec d'autres objets réalisés en des matières différentes, notamment plastiques, par exemple un emballage. Dans ce cas, il est possible que le plastifiant migre du produit fini vers l'emballage, ce qui a pour conséquences les inconvénients décrits ci-dessus. Une autre possibilité est de fabriquer des articles multicouches comprenant une couche de polymère plastifié en contact avec une ou plusieurs couches de composition différente. Dans ce cas, la migration du plastifiant d'une couche dans une autre peut entraîner l'apparition d'un phénomène dit de « curling », c'est-à-dire un phénomène de déformation de l'article multicouche lié à une différence de stabilité dimensionnelle des différentes couches.

EP 2 990 210 décrit une composition plastifiante à base d'un plastifiant (B) et d'un composé (A) qui joue le rôle d'accélérateur de gélification. L'objectif à résoudre par D2 est de fournir des compositions plastifiantes qui restent liquides à basse température et qui ne "migrent" pas dans le plastique plastifiée.

Il reste donc un besoin de trouver de nouvelles compositions plastifiantes, liquides à température ambiante, ces compositions permettant de résoudre au moins en partie les problèmes précédemment cités.

## Résumé de l'invention

C'est justement le mérite de la Demanderesse qui est parvenue à trouver une composition comprenant des diesters de 1,4 : 3,6-dianhydrohexitol présentant un comportement amélioré, notamment en ce qui concerne sa facilité de manipulation et de stockage. Ces compositions permettent de plastifier de manière très efficace les polymères, tout en limitant les problèmes de migration précédemment décrits.

L'invention porte ainsi sur une composition liquide à température ambiante, qui comprend :

- au moins un diester de 1,4 : 3,6-dianhydrohexitol (A);
- au moins un composé (B), choisi parmi les acides gras modifiés et les esters d'acide gras modifiés, ledit composé (B) étant porteur d'au moins une fonction époxy et/ou acétyle ;

ladite composition liquide comprenant au moins 60% en masse des constituants (A) et (B).

Dans les documents FR2990210 A1, WO99/45060 A1 et WO2008/095571 A1, il est décrit des compositions de polymères plastifiés avec du diester de 1,4 : 3,6-dianhydrohexitol, les compositions comprenant en outre une huile de soja époxydée ; ces constituants sont ajoutés séparément au polymère. Au contraire de ce qui est décrit dans ces deux documents, la composition selon l'invention est une composition plastifiante liquide, qui comprend les 2 constituants, et qui est utilisée directement en mélange avec le polymère.

Cette composition, utile comme plastifiant de polymères, présente également l'avantage d'être liquide à température ambiante, ce qui permet un dosage aisé du plastifiant lors de la fabrication des objets polymériques plastifiés à l'aide de cette composition. Du fait de ses températures de fusion et de congélation plus basses, elle peut être aisément manipulée et stockée avant utilisation.

La composition présente également l'avantage de pouvoir être utilisée pour la plastification de matières plastiques, notamment de polychlorure de vinyle.

## Description détaillée de l'invention

Un premier objet de l'invention porte sur une composition, liquide à température ambiante, cette composition étant utile comme composition plastifiante.

Une « composition plastifiante » est une composition susceptible de plastifier les polymères. Il peut ainsi s'agir d'une composition qui, lorsqu'elle est mélangée en quantité suffisante avec un polymère, permet de diminuer la température de transition vitreuse dudit polymère.

Par « liquide à température ambiante », on entend généralement une composition présentant des températures de fusion et de congélation toutes deux supérieures à 15°C.

La composition de l'invention comprend un diester de 1,4:3,6-dianhydrohexitol (A).

Le 1,4:3,6-dianhydrohexitol est un diol de formule brute $C_6H_{10}O_4$.

On utilise selon l'invention trois isomères du 1,4:3,6-dianhydrohexitol : l'isosorbide, l'isomannide et l'isoidide, préférentiellement, l'isosorbide.

De préférence, au moins un diester de 1,4 :3,6-dianhydrohexitol (A) est un diester alkylique. De préférence, dans le cas de mélange de composés (A), il est constitué de diesters alkyliques de 1,4 :3,6-dianhydrohexitol.

Le ou les groupes alkyle des esters de 1,4:3,6-dianhydrohexitol sont avantageusement des groupes alkyle en $C_{1-24}$, de préférence des groupes alkyle $C_{3-15}$, tout préférentiellement en $C_{4-11}$, en particulier en $C_{6-9}$.

Le groupe alkyle peut être un groupe cycloalkyle, alkyle linéaire ou alkyle ramifié. Préférentiellement, le groupe alkyle est linéaire ou ramifié, tout préférentiellement linéaire.

Cet ester alkylique est produit par réaction d'estérification du 1,4:3,6-dianhydrohexitol avec un acide carboxylique. Une réaction d'estérification peut s'écrire de la manière suivante :

$$R-OH + HO(O)C - R' => R-O(O)C-R' + H_2O$$

Ainsi, si l'acide utilisé pour l'estérification comprend 8 atomes de carbone, le groupe alkyle de l'ester est R' et est donc un groupe alkyle en $C_7$.

A titre d'exemple d'acide carboxylique, on peut citer l'acide acétique, l'acide butyrique, l'acide valérique, l'acide caproïque, l'acide énanthique, l'acide caprylique, l'acide pélargonique, l'acide nonanoïque, l'acide caprique, l'acide undécylique, l'acide laurique, l'acide tridécylique, l'acide myristique, l'acide pentadécylique, l'acide palmitique.

Dans le cas où une seule des deux fonctions alcool du diol a réagi par esterification, l'ester est un monoester. Il s'agit d'un diester dans le cas où les deux fonctions alcool du diol ont réagi dans une réaction d'esterification. L'ester de 1,4:3,6-dianhydrohexitol utile à l'invention est un diester. Il peut comprendre différents groupes alkyle, c'est-à-dire que le diester est obtenu avec 2 acides carboxyliques différents, par exemple à partir d'un mélange d'acide caprique et d'acide caprylique ou encore d'un mélange d'acide caprique, d'acide caprylique et d'acide laurique.

Une composition comprenant un mélange d'esters de 1,4:3,6-dianhydrohexitol est bien évidemment conforme à l'invention. A titre d'exemple de mélange d'esters utilisables selon l'invention, on peut citer ceux décrits dans les demandes WO2014080151 A1 et WO2014080152 A1.

La composition comprend en outre au moins un composé (B), différent du composé (A), et choisi parmi les acides gras modifiés et les esters d'acide gras modifiés, ledit composé (B) étant porteur d'au moins une fonction époxy et/ou acétyle.

De préférence, la composition selon l'invention comprend, comme composé (B), au moins un ester d'acide gras modifié. De préférence, dans le cas de mélange de composés (B), ce mélange est constitué d'un mélange d'esters d'acide gras modifiés. Avantageusement, au moins un de ces esters d'acide gras modifié est un glycéride comprenant au moins un acide gras modifié, c'est-à-dire qu'au moins un acide gras modifié est lié chimiquement au glycérol ; de préférence au moins un de ces esters d'acide gras modifié est un triglycéride comprenant au moins un acide gras modifié. De préférence, dans le cas de mélange de composés (B), il est constitué d'un mélange de triglycérides comprenant au moins un acide gras modifié.

Selon l'invention, l'acide gras modifié ou l'ester d'acide gras modifié est porteur d'au moins une fonction époxy et/ou acétyle.

En ce qui concerne la fonction époxy, elle peut être obtenue à partir d'un acide gras ou un d'ester d'acide gras porteur d'au moins une double liaison carbone-carbone : la fonction époxy peut être obtenue par une réaction d'époxydation de la double liaison.

En ce qui concerne la fonction acétyle, elle peut être obtenue par acétylation d'une fonction hydroxyle ou encore d'une fonction époxyde, par exemple par réaction d'anhydride acétique sur une des deux fonctions précédemment citées. Comme exemples de composés (B) porteurs d'au moins une fonction acétyle, on peut citer les composés (II) décrits dans la demande US 2012/0214920, eux-mêmes susceptibles d'être obtenus par acétylation d'acides gras porteurs d'au moins une fonction époxy ou de mono- ou di-glycérides comprenant ces acides gras porteurs d'au moins une fonction époxy.

De préférence, au moins un des composés (B) est porteur d'au moins une fonction époxy. Selon cette variante, dans le cas de mélange de composés (B), il est avantageusement constitué d'un mélange de composés (B) porteurs d'au moins une fonction époxy. Tout préférentiellement, au moins un des composés (B) est un triglycéride d'au moins un acide gras modifié porteur d'au moins une fonction époxy. Selon cette variante toute préférée, dans le cas de mélange de composés (B), il est avantageusement constitué d'un mélange de triglycérides d'au moins un acide gras modifié porteur d'au moins une fonction époxy. Ce mélange de triglycérides peuvent être une huile de soja époxydée et/ou une huile de lin époxydée et/ou une huile de tournesol époxydée et/ou une huile de pépins de raisins époxydée et/ou une huile de palme époxydée et/ou une huile de colza époxydée et/ou une huile de ricin époxydée, de préférence une huile de soja époxydée. Il peut également s'agir d'un mélange de composés (B) constitués par exemple d'un mélange d'huile époxydée et d'un ester tel d'acide gras époxydé, tel que décrit par exemple dans la demande WO 2013055961 A1.

Comme décrit précédemment, la composition selon l'invention, qui présente l'avantage d'être liquide à température ambiante (25°C), est particulièrement utile pour la plastification de polymères.

Il est précisé que, sauf contre-indication, les quantités massiques sont exprimées en masse sèche. Par ailleurs, en ce qui concerne les différents constituants, leurs quantités sont exprimées par rapport à la totalité des constituants ; par exemple pour la quantité de (A), si différents constituants (A) sont présents dans la composition, on exprime la quantité de la totalité des constituants (A).

La composition liquide selon l'invention comprend au moins 60% en masse des constituants (A) et (B). Avantageusement, la composition comprend au moins 60% en masse des constituants (A) et (B), de préférence au moins 80%, tout préférentiellement est constituée des constituants (A) et (B).

Le rapport massique (A)/(B) peut aller de 95/5 à 5/95, avantageusement de 90/10 à 20/80, préférentiellement de 85/15 à 30/70, tout préférentiellement de 80/20 à 40/60, voire de 65/35 à 45/55.

Dans ces ratios, et en particulier dans les ratios préférés, la température de congélation de la composition selon l'invention est diminuée de manière importante, ce qui permet de faciliter le stockage et la manipulation des compositions de l'invention. De plus, la composition selon l'invention présente l'avantage de pouvoir être fluide à température ambiante, c'est-à-dire de pouvoir présenter une viscosité Brookfield à 25°C inférieure à 2000 mPa.s. Ceci est d'autant plus surprenant que certains composés (B), notamment les huiles époxydées, peuvent présenter un aspect visqueux, voire gélifié, à température ambiante.

Selon l'invention, la composition est liquide à température ambiante. La température de congélation de la composition (TCc) peut être inférieure à 10° C, avantageusement inférieure à 0°C, de préférence inférieure à -5°C, tout préférentiellement inférieure à -10°C, par exemple inférieure à -15°C.

Avantageusement, la température de congélation de la composition selon l'invention est inférieure à celle du composé (A) ou du mélange de composés (A) (TCa). Ceci est d'autant plus surprenant que la température de congélation du composé (B) peut présenter une température de congélation encore plus élevée que celle du composé (A). De préférence TCc est inférieure à TCa-2 °C, tout préférentiellement inférieure à TCa-5 °C.

Selon l'invention, la température de fusion de la composition (TFc) peut être inférieure à 10° C, avantageusement inférieure à 0°C, de préférence inférieure à - 5°C, tout préférentiellement inférieure à -10°C.

Avantageusement, la température de fusion de la composition selon l'invention est inférieure à celle du composé (A) ou du mélange de composés (A) (TFa). De préférence TFc est inférieure à TFa-5 °C, tout préférentiellement inférieure à TFa-10 °C.

Les températures de congélation et de fusion peuvent être déterminées en mesurant la viscosité du plastifiant en fonction de la température. Pour mesurer cette évolution de la viscosité, une goutte du plastifiant est placée sur un plateau de 50 mm de diamètre et un angle de 1° (géométrie CP 50-1) pour une mesure des modules visqueux et élastiques en fonction de la température. Par exemple, le gradient de température est de 2°C/min, le balayage en température de 30°C à -30°C, la fréquence d'oscillation de 1 Hertz et la déformation de 1 à 0,1%. La température de congélation mesurée correspond à la température de changement d'état du produit soumis à l'essai et correspond au croisement des modules visqueux et élastiques. Puis, avec les mêmes gradients, fréquence d'oscillation et déformation, en appliquant un balayage en température de -30°C à 30°C, on détermine la température de fusion qui correspond également au croisement des modules visqueux et élastiques. Elle peut être mesurée à l'aide d'un rhéomètre de type Physica MCR Rheometer.

La composition de l'invention peut être utilisée pour des applications dans lesquelles l'utilisation des esters de 1,4 : 3,6-dianhydrohexitol, des huiles et acides gras époxydés et/ou acétylés sont déjà connues. Elle peut notamment être utilisée comme plastifiant, comme lubrifiant, ou encore comme stabilisant. Elle peut être utilisée dans les produits des domaines du médical, de l'hygiène personnelle, de l'emballage, du papier, de l'automobile, du transport, du pétrole, du gaz, du bâtiment et de la construction. A titre d'exemple, la composition peut être notamment utilisée pour la fabrication de mousses ou de mastics. Toutefois, comme indiqué précédemment, la composition selon l'invention est particulièrement avantageuse lorsqu'elle est utilisée en tant que composition plastifiante.

En effet, la Demanderesse a pu constater que la composition plastifiante permettait de plastifier les polymères de manière excellente, de façon au moins aussi satisfaisante qu'avec les esters de 1,4 : 3,6-dianhydrohexitol.

Un autre objet de l'invention porte sur l'utilisation de la composition selon l'invention pour la plastification de polymères. Pour des raisons de clarté il est indiqué que, selon l'invention, les constituants (A) et (B) sont mélangés pour former la composition plastifiante avant que cette dernière soit utilisée pour la plastification de polymère.

L'invention porte également sur un procédé de fabrication de polymère plastifié comprenant une étape de mise en contact de la composition plastifiante selon l'invention avec un polymère. Il est précisé également que par « mise en contact de la composition plastifiante avec un polymère », on entend que les constituants (A) et (B) sont mélangés pour former la composition plastifiante, et ceci préalablement à la mise en contact avec le polymère.

Le polymère peut être choisi parmi les polymères vinyliques tels que le polychlorure de vinyle et les copolymères de chlorure de vinyle, les polyuréthanes, les polyesters tels que l'acide polylactique, les polymères cellulosiques, les amidons, les polymères acryliques, les polyacétates, les caoutchoucs naturels ou synthétiques, notamment les caoutchoucs fabriqués à partir de styrène et/ou de butadiène tels que les caoutchoucs de type SBR, BR ou NBR, les polyamides ou les mélanges de ces polymères, préférentiellement le polychlorure de vinyle. Par polychlorure de vinyle, on entend selon la présente invention les homopolymères de chlorure de vinyle ou les copolymères comprenant du chlorure de vinyle, par exemple les copolymères acétate de vinyle/chlorure de vinyle.

Le polymère ainsi obtenu est un polymère plastifié. Pour l'homme du métier, cela signifie que le polymère et la composition plastifiante sont intimement mélangés. Les constituants de la composition plastifiante sont introduits entre les chaînes du polymère solide et il en résulte, après transformation, un polymère plastifié constitué d'une phase solide.

Préalablement à sa mise en contact avec la composition plastifiante, le polymère peut être sous toute forme, par exemple sous forme de granulés ou de poudre, ou encore sous forme fondue.

On peut également fabriquer une pâte de polymère comprenant un mélange d'une poudre de polymère et de la composition selon l'invention. Cette pâte est généralement appelée *plastisol* et permet de former des objets par les procédés décrits ci-après. Préférentiellement, le diamètre moyen de particules de la poudre est compris entre 1 et 30 μm, par exemple entre 1 et 20 μm. Dans le cas du polychlorure de vinyle, on peut obtenir ce type de poudres en préparant le PVC par émulsion ou micro-suspension. Cette pâte est généralement obtenue par mélange mécanique, préférentiellement sans chauffage, de la poudre de polymère avec la composition plastifiante.

Ces plastisols sont, selon les quantités sélectionnées de polymère et de composition plastifiante, plus ou moins fluides. Classiquement, les plastisols sont préparés dans des mélangeurs rapides de type turbine, des mélangeurs planétaires ou des mélangeurs lents qui sont des mélangeurs planétaires à pales horizontales en Z.

La composition plastifiante et le polymère sont avantageusement mélangés dans des proportions massiques telles que la quantité de composition plastifiante va de 1 à 900 parts pour 100 parts de polymère, avantageusement de 5 à 180 parts, préférentiellement de 15 à 120 parts de composition plastifiante. On peut les introduire dans le système mélangeur par tout moyen adapté, telle que trémie d'alimentation, ou de façon manuelle.

Dans le cas de la pâte de polymère, on préfère que les quantités de composition plastifiante aillent de 30 à 120 parts pour 100 parts de poudre de polymère.

Dans la composition de polymère plastifié, on peut également utiliser, en plus de la composition plastifiante et du polymère, des additifs optionnels. Ces additifs peuvent être choisis parmi les stabilisants, les anti-UV, les charges, les colorants, les pigments, les agents gonflants, les émulsifiants, les abaisseurs de viscosité différents de la composition plastifiante, les épaississants, les agents de démoulage, les agents matants, les agents d'adhésion, les agents antistatiques, les agents fongicides et les agents odoriférants. Les quantités de chaque additif sont choisies afin d'apporter les propriétés désirées lors de la mise en oeuvre du procédé ou pour l'objet finalement obtenu. Ces additifs peuvent être introduits dans la composition directement ou sous forme de mélange-maître. La quantité en additif optionnel va généralement de 1 à 600 parts pour 100 parts de polymère (C), généralement de 2 à 80 parts.

Selon une première variante, le procédé de fabrication de l'invention comprend une étape de mélange thermomécanique d'un polymère et de la composition plastifiante selon l'invention.

Selon cette première variante, l'étape de mélange thermomécanique est réalisée dans un système mélangeur qui est un mélangeur pour thermoplastiques. Ce mélangeur peut être choisi parmi les malaxeurs, les mélangeurs BUSS, les mélangeurs à cylindres et les extrudeuses.

L'étape de mélange thermomécanique est réalisée à une température adaptée à la température de transformation du polymère. A titre d'exemple, la température du mélange lors du mélange thermomécanique est préférentiellement comprise entre 60 et 200°C pour un PVC.

Pour un mélange thermomécanique, on peut utiliser un polymère sous tout type de forme, notamment sous formes de granulés ou de poudre.

Selon cette première variante, on réalise avantageusement une étape préalable de mélange à sec (en anglais *dry blend*) de la composition plastifiante avec le polymère avant le mélange thermomécanique. Ce mélange à sec peut être réalisé dans un simple mélangeur mécanique, qui peut être chauffé à une température inférieure à la température de fusion ou de gélification du polymère.

L'objet peut avantageusement être mis en forme par calandrage, injection, extrusion injection, intrusion, trempage en lit fluidisé, pistolage électrostatique, moulage, rotomoulage, extrusion moulage, frittage, thermoformage, pressage, extrusion formage, extrusion gainage, extrusion soufflage. On peut également utiliser des techniques de coextrusion pour former des objets multicouches.

Selon une seconde variante, on utilise pour former l'objet selon l'invention un procédé de type *plastisol* avec la pâte de polymère préalablement décrite.

Dans ce type de procédé, l'étape de mise en forme est généralement une étape d'enduction, de trempage, de foulardage, de pulvérisation, de coulée, de moulage, d'embouage, ou de moulage par rotation de la pâte de polymère, ce qui permet de former un objet préformé.

L'étape de chauffage du procédé est une étape de cuisson dudit objet préformé, cette étape ayant généralement lieu après l'étape de préformage (c'est le cas par exemple de l'enduction). Elle peut parfois également avoir lieu pendant l'étape de mise en forme de l'objet préformé (c'est le cas par exemple du trempage, de l'embouage ou du moulage par rotation). Cette étape de cuisson peut se faire à une température comprise entre 60 et 300°C, par exemple entre 100 et 250°C, généralement entre 140 et 220°C. Elle peut se faire sous air ou sous atmosphère contrôlée, par exemple sous atmosphère inerte.

L'étape de mise en forme de l'objet est préférentiellement une étape d'enduction de la pâte de polymère sur un support, cette enduction étant réalisée avant l'étape de cuisson dudit support enduit. L'étape d'enduction peut être réalisée sur un support textile, un voile de verre, du métal, un polymère synthétique ou un papier.

L'enduction peut être réalisée à l'aide de toute tête d'enduction, par exemple à l'aide d'une racle ou d'un cylindre.

Cette enduction est capable d'être, selon une première sous-variante, une enduction dite « enduction sur support » comme décrite ci-dessus, ou selon une seconde sous-variante, une enduction dite « enduction sans support ». Dans ce dernier cas, le support enduit peut être détaché après cuisson et le procédé comprend en outre une étape ultérieure de séparation du support pour former un film ou une feuille de polymère plastifié. Un tel support peut être en papier siliconé.

L'étape de cuisson est généralement réalisée dans un four, par exemple un four tunnel, sur un tambour gélificateur ou sous une rampe infrarouge.

On peut également former un objet comprenant la composition de polymère plastifié.

L'objet comprenant la composition de polymère plastifié peut être tout type d'objet, tel qu'un film, une feuille, un granulé, un revêtement de sol, un revêtement mural, un tissu enduit plastique, notamment un cuir artificiel, par exemple pour chaussure, pour maroquinerie ou pour ameublement, une bâche, un *liner* par exemple pour piscine, un store, un container souple, un vêtement, un produit médical, un gant, une botte, un joint, un revêtement protecteur, un mannequin pour vitrine, un jouet par exemple un ballon ou une poupée, un tube, des profilés notamment des profilés de fenêtre, des pièces automobiles telles que tableau de bord, siège, réservoir ou appuie-tête. Ces pièces peuvent être des pièces cellulaires, moussées ou meringuées, c'est-à-dire comprenant des cellules d'air. Elles peuvent également être au contraire des pièces compactes.

Par rapport aux polymères plastifiés avec des esters de 1,4 : 3,6-dianhydrohexitol, le phénomène de migration de la composition plastifiante hors du polymère est drastiquement diminué.

Bien évidemment, des améliorations sont encore plus marquées lorsque les compositions comprennent des quantités en monoesters de 1,4 : 3,6-dianhydrohexitol et/ou en acides résiduels faibles puisque ces espèces sont connues pour migrer plus facilement.

Ces pièces peuvent être recouvertes d'une couche de vernis qui permet de limiter encore plus cette migration.

L'invention va maintenant être détaillée dans les exemples de réalisation ci-après. Il est précisé que ces derniers ne limitent en rien l'objet de la présente invention.

**Exemples** :

**Exemple 1** : **Compositions**

POLYSORD® ID 37 : Diester d'isosorbide commercialisé par la société ROQUETTE LANKROMARK® E 2307 : Huile de soja époxydée commercialisée par la société ACKROS CHEMICALS.

Tableau 1

| Composition | POLYSORD® ID 37 | LANKROMARK® E 2307 |
|---|---|---|
| Composition 1 | 100 % | - |
| Composition 2 | 70% | 30 % |
| Composition 3 | 50% | 50 % |
| Composition 4 | - | 100 % |

Les compositions 2 et 3 selon l'invention sont préparées par simple mélange mécanique à température ambiante.

**Exemple 2 : Evaluation des températures de changement d'état**

Les températures de congélation et de fusion sont déterminées en mesurant la viscosité du plastifiant en fonction de la température à l'aide d'un rhéomètre de type Physica MCR 501. Pour mesurer cette évolution de la viscosité, une goutte du plastifiant est placée sur un plateau de 50 mm de diamètre et un angle de 1° (géométrie CP 50-1) pour une mesure des modules visqueux et élastiques en fonction de la température. Le gradient de température est de 2°C/min, le balayage en température de 30°C à -30°C, la fréquence d'oscillation de 1 Hertz et la déformation de 1 à 0,1%. La température de congélation mesurée correspond à la température de changement d'état du produit soumis à l'essai et correspond au croisement des modules visqueux et élastiques. Puis, avec les mêmes gradients, fréquence d'oscillation et déformation, en appliquant un balayage en température de -30°C à 30°C, on détermine la température de fusion qui correspond également au croisement des modules visqueux et élastiques.

Le Tableau 2 ci-après présente les températures de congélation et de fusion des compositions telles que décrites dans l'exemple 1.

Tableau 2

| Composition | Température de congélation (°C) | Température de fusion (°C) |
|---|---|---|
| Composition 1 | -12 | 3 |
| Composition 2 | -17 | -11 |
| Composition 3 | -20 | -13 |
| Composition 4 | -7 | 3 |

Ce tableau montre l'effet avantageux des compositions 2 et 3 selon l'invention sur les températures de congélation et températures de fusion par rapport aux compositions 1 et 4 de l'art antérieur. Les températures de fusion et de congélation sont toutes les deux plus basses que celles des produits purs.

**Exemple 3 : Evaluation des propriétés mécaniques**

Deux formulations de PVC plastifié selon l'invention sont réalisées à l'aide des produits suivants :

Formule 1 :

PVC MARVYLAN® S7102 : 100 parts
Stabilisant BAEROSTAB® NT 319P (Ca/Zn poudre) : 1,5 part
Co-stabilisant LANKROFLEX® E 2307 (huile de soja époxydée) : 2 parts
Composition plastifiante selon exemple 1 : 34 parts

Formule 2 :

PVC MARVYLAN® S7102 : 100 parts
Stabilisant BAEROSTAB® NT 319P (Ca/Zn poudre) : 1,5 part
Co-stabilisant LANKROFLEX® E 2307 (huile de soja époxydée) : 2 parts

Composition plastifiante selon exemple 1 : 60 parts

En référence, des formulations similaires utilisant un plastifiant standard du marché, le DINP, ont également été évaluées.

La préparation des éprouvettes pressées destinées à la caractérisation des propriétés mécaniques se fait en plusieurs étapes.

Dans un premier temps, du PVC (poudre) est plastifié avec la composition plastifiante dans un mélangeur planétaire de type PLANETMIX 500 (Sté Thermo Scientific) équipé d'un circuit de régulation de la température. Une masse de 500 g de PVC est introduite dans le mélangeur, avec la quantité correspondante de stabilisant thermique et de co-stabilisant thermique. Lorsque la température du mélange atteint 85°C, la composition plastifiante est incorporée sur toute la surface de la poudre de PVC. La préparation est ensuite mélangée pendant encore 8 min après l'absorption du plastifiant dans le PVC.

Dans un second temps, des plaques de PVC plastifié sont confectionnées à l'aide d'une presse de type CARVER et d'un moule de 30 x 30 cm en inox poli miroir muni d'un cadre de 2 mm d'épaisseur et d'un couvercle inox poli miroir. Une quantité de 180 g de poudre de PVC plastifié est versé uniformément dans le cadre placé à l'intérieur du moule, puis le tout est recouvert d'un couvercle. L'ensemble est placé sur le plateau de la presse préchauffée à 185°C et le programme qui consiste en l'application d'une force de fermeture de 18 000 kg à 185°C pendant 2 min est lancé. Après refroidissement jusqu'à une température proche de 45°C, la plaque de PVC ainsi obtenue est alors démoulée.

La détermination de la valeur de dureté Shore D se fait au moyen d'un duromètre Shore D de type MITUTOYO HH-333. Le pénétreur du duromètre est appliqué sur une superposition de 3 plaques de 2 mm d'épaisseur, soit une épaisseur totale de 6 mm, et l'enfoncement mesuré est lu sur le cadran du duromètre. Le résultat de dureté Shore D correspond à la moyenne de 10 mesures.

Pour le test de résistance à la traction, 10 éprouvettes de type 5A (Dimensions : 25 mm x 4 mm ; épaisseur de 2 mm) sont découpées à l'aide d'un emporte-pièce à partir des plaques de PVC plastifié obtenues comme décrit précédemment.

Ces éprouvettes sont ensuite caractérisées en traction sur un banc de traction ou extensomètre de type INSTRON Modèle « 5966 » avec les paramètres suivants : Vitesse d'avancement = 50 mm / min ; Cellule = 5 KN. La précontrainte est remise à zéro une fois l'éprouvette en place et les mors serrés. L'extensomètre trace la courbe contrainte/déformation de l'éprouvette jusqu'à sa rupture.

En fin d'essai, les valeurs de contrainte à 100 % de déformation et de déformation à la rupture sont relevées.

Le Tableau 3 ci-après présente, pour chaque composition testée dans la formule 1, les valeurs de dureté Shore D, contrainte à 100 % de déformation et déformation à la rupture obtenues.

Tableau 3

| Plastifiant à 34 pcr | Dureté Shore D | Contrainte à 100% de déformation (MPa) | Déformation ou allongement à la rupture (%) |
|---|---|---|---|
| Composition 1 | 60 | 16 | 351 |
| Composition 2 | 58 | 15 | 376 |
| Composition 3 | 58 | 15 | 326 |
| Composition 4 | 58 | 16 | 313 |
| DINP | 61 | 16 | 345 |

Le Tableau 4 ci-après présente, pour chaque composition testée dans la formule 2, les valeurs de dureté Shore D, contrainte à 100 % de déformation et déformation à la rupture obtenues.

Tableau 4

| Plastifiant à 60 pcr | Dureté Shore D | Contrainte à 100% de déformation (MPa) | Déformation ou allongement à la rupture (%) |
|---|---|---|---|
| Composition 1 | 32 | 4 | 590 |
| Composition 2 | 31 | 5 | 541 |
| Composition 3 | 34 | 6 | 548 |
| Composition 4 | 34 | 6 | 546 |

(suite)

| Plastifiant à 60 pcr | Dureté Shore D | Contrainte à 100% de déformation (MPa) | Déformation ou allongement à la rupture (%) |
|---|---|---|---|
| DINP | 33 | 6 | 551 |

Ces essais montrent que les compositions 2 et 3 selon l'invention plastifient le polymère de manière au moins aussi satisfaisante que les compositions 1 et 4 de l'art antérieur.

**Exemple 4 : Effet sur les propriétés de migration de la composition plastifiante**

Un des critères essentiels pour tout polymère plastifié est le taux de migration de la composition plastifiante utilisée. En effet, celui-ci doit être minimal si l'on souhaite préserver les propriétés du matériau dans le temps.

Préparation des essais :

A partir d'une plaque de PVC plastifié telle que réalisée dans l'exemple 1, on découpe des éprouvettes de PVC (40 x 40 mm, épaisseur 2 mm). Elles sont conditionnées pendant 72 h à 20°C - 65 % HR. Pour chaque éprouvette de PVC à tester, deux supports absorbants de PVC non plastifié de type KOMADUR (Sté SIGMA PLV) de dimension 80 x 80 mm sur 1 mm d'épaisseur sont préparés. Les éprouvettes et les supports absorbants sont pesés sur une balance de précision. Les éprouvettes de PVC plastifiées sont ensuite placées entre les deux supports absorbants, au centre de ceux-ci. Cet ensemble est disposé entre deux plaques de verre, et un poids de 5 kg est posé encore au-dessus. Le tout est placé dans une étuve ventilée à 70°C pendant une semaine. Après une semaine d'étuve, les éprouvettes sont remises à conditionner à 20°C - 65 % HR pendant 2 jours. Enfin, elles sont pesées à nouveau afin de déterminer le taux de migration (T) de l'éprouvette par le calcul suivant :

$$T = \text{(masse éprouvette avant étuve – masse éprouvette après étuve)} \times 100 / \text{masse éprouvette avant étuve}.$$

Pour les compositions selon l'invention, qui comprennent a% de diester (A) et b% de composé (B), l'effet synergique est déterminé en calculant, par rapport au taux de migration théorique, le pourcentage de diminution de migration (P) selon la formule suivante :

$$P = (T-Tth)/Tth \times 100$$

avec

$$Tth = \%a \times T_A + \%b \times T_B$$

Les résultats sont présentés dans le Tableau 5 pour la formule 1 et le Tableau 6 pour la formule 2.

Tableau 5

| Plastifiant à 34 pcr | Taux de migration Pour(%) | Pourcentage de diminution de migration (%) |
|---|---|---|
| Composition 1 | 2,4 | |
| Composition 2 | 1,4 | -22% |
| Composition 3 | 0,6 | -57% |
| Composition 4 | 0,4 | |
| DINP | 1,2 | |

Tableau 6

| Plastifiant à 60 pcr | Taux de migration (%) | Pourcentage de diminution de migration (%) |
|---|---|---|
| Composition 1 | 9,2 | |
| Composition 2 | 5,1 | -27% |
| Composition 3 | 4,3 | -22% |
| Composition 4 | 1,8 | |
| DINP | 4,6 | |

Ces tableaux montrent un effet de synergie des compositions 2 et 3 selon l'invention comparées aux compositions 1 et 4 de l'art antérieur en termes de résistance à la migration. Le taux de migration est également similaire à celui observé pour un polymère plastifié par le DINP, qui est un plastifiant du PVC standard du marché.


**Revendications**

1. Composition liquide à température ambiante qui comprend un mélange:

   • d'au moins un diester de 1,4 : 3,6-dianhydrohexitol (A); et
   • d'au moins un composé (B), choisi parmi les acides gras modifiés et les esters d'acide gras modifiés, ledit composé (B) étant porteur d'au moins une fonction époxy et/ou acétyle ;

   ladite composition liquide comprenant au moins 60% en masse des constituants (A) et (B).

2. Composition selon la revendication précédente **caractérisée en ce qu'**au moins un composé (B) est un ester d'acide gras modifié.

3. Composition selon l'une des revendications précédentes **caractérisée en ce qu'**au moins un composé (B) est un triglycéride comprenant au moins un acide gras modifié.

4. Composition selon l'une des revendications précédentes **caractérisée en ce qu'**au moins un composé (B) est porteur d'au moins une fonction époxy.

5. Composition selon la revendication 3 ou 4 **caractérisée en ce qu'**au moins un composé (B) est un triglycéride d'au moins un acide gras modifié porteur d'au moins une fonction époxy.

6. Composition selon la revendication précédente **caractérisée en ce que** le triglycéride est une huile de soja époxydée et/ou une de lin époxydée, de préférence une huile de soja époxydée.

7. Composition selon l'une des revendications précédentes **caractérisée en ce qu'**au moins un diester de 1,4 : 3,6-dianhydrohexitol (A) est un diester alkylique de 1,4 :3,6-dianhydrohexitol.

8. Composition selon la revendication 7 **caractérisée en ce qu'**au moins un des groupes alkyle de l'ester de 1,4:3,6-dianhydrohexitol est un groupe alkyle en $C_{1-24}$, avantageusement en $C_{3-15}$, de préférence en $C_{4-10}$, tout préférentiellement en $C_{6-9}$.

9. Composition selon l'une des revendications précédentes **caractérisée en ce qu'**au moins un diester de 1,4 : 3,6-dianhydrohexitol (A) est un diester d'isosorbide.

10. Composition selon l'une des revendications précédentes **caractérisée en ce qu'**elle comprend au moins 80% en masse des constituants (A) et (B), de préférence est constituée des constituants (A) et (B).

11. Composition selon l'une des revendications précédentes **caractérisée en ce que** le rapport massique (A)/(B) va de 95/5 à 5/95, avantageusement de 90/10 à 20/80, préférentiellement de 85/15 à 30/70.

**12.** Composition selon la revendication précédente **caractérisée** en ce le rapport massique (A)/(B) va de 80/20 à 40/60.

**13.** Utilisation d'une composition selon l'une des revendications 1 à 12 comme composition plastifiante de polymères.

**14.** Utilisation selon la revendication 13, **caractérisée en ce que** le polymère est choisi parmi les polymères vinyliques tels que le polychlorure de vinyle et les copolymères de chlorure de vinyle, les polyuréthanes, les polyesters, les polymères cellulosiques, les amidons, les polymères acryliques, les polyacétates, les caoutchoucs naturels ou synthétiques, les polyamides ou les mélanges de ces polymères, préférentiellement le polychlorure de vinyle.

**15.** Utilisation selon la revendication 13 ou 14 pour diminuer le phénomène de migration de la composition plastifiante.

**16.** Procédé de fabrication de polymère plastifié comprenant une étape de mise en contact de la composition plastifiante selon l'une des revendications 1 à 12 avec un polymère, ledit polymère étant avantageusement choisi parmi les polymères vinyliques tels que le polychlorure de vinyle et les copolymères de chlorure de vinyle, les polyuréthanes, les polyesters, les polymères cellulosiques, les amidons, les polymères acryliques, les polyacétates, les caoutchoucs naturels ou synthétiques, les polyamides ou les mélanges de ces polymères, préférentiellement le polychlorure de vinyle.

**Patentansprüche**

**1.** Bei Raumtemperatur flüssige Zusammensetzung, umfassend eine Mischung:

- aus mindestens einem Diester von 1,4 : 3,6-Dianhydrohexitol (A); und
- aus mindestens einer Verbindung (B) ausgewählt aus den modifizierten Fettsäuren und den modifizierten Fettsäureestern, wobei die Verbindung (B) Träger mindestens einer Epoxy- und/oder Acetylfunktion ist;

wobei die flüssige Zusammensetzung mindestens 60 Gew.-% der Bestandteile (A) und (B) umfasst.

**2.** Zusammensetzung nach dem vorhergehenden Anspruch, **dadurch gekennzeichnet, dass** mindestens eine Verbindung (B) ein modifizierter Fettsäureester ist.

**3.** Zusammensetzung nach einem der vorhergehenden Ansprüche, **dadurch gekennzeichnet, dass** mindestens eine Verbindung (B) ein Triglycerid ist, das mindestens eine modifizierte Fettsäure umfasst.

**4.** Zusammensetzung nach einem der vorhergehenden Ansprüche, **dadurch gekennzeichnet, dass** mindestens eine Verbindung (B) Träger von mindestens einer Epoxyfunktion ist.

**5.** Zusammensetzung nach Anspruch 3 oder 4, **dadurch gekennzeichnet, dass** mindestens eine Verbindung (B) ein Triglycerid mindestens einer modifizierten Fettsäure ist, die Träger von mindestens einer Epoxyfunktion ist.

**6.** Zusammensetzung nach dem vorhergehenden Anspruch, **dadurch gekennzeichnet, dass** das Triglycerid ein epoxidiertes Sojaöl und/oder ein epoxidiertes Leinsamenöl, vorzugsweise ein epoxidiertes Sojaöl, ist.

**7.** Zusammensetzung nach einem der vorhergehenden Ansprüche, **dadurch gekennzeichnet, dass** mindestens ein Diester von 1,4 : 3,6-Dianhydrohexitol (A) ein Alkyldiester von 1,4 : 3,6-Dianhydrohexitol ist.

**8.** Zusammensetzung nach Anspruch 7, **dadurch gekennzeichnet, dass** mindestens eine der Alkylgruppen des Esters von 1,4 : 3,6-Dianhydrohexitol eine $C_{1-24}$-, vorzugsweise $C_{3-15}$-, bevorzugt $C_{4-10}$-, am meisten bevorzugt $C_{6-9}$-Alkylgruppe ist.

**9.** Zusammensetzung nach einem der vorhergehenden Ansprüche, **dadurch gekennzeichnet, dass** mindestens ein Diester von 1,4 : 3,6-Dianhydrohexitol (A) ein Diester von Isosorbid ist.

**10.** Zusammensetzung nach einem der vorhergehenden Ansprüche, **dadurch gekennzeichnet, dass** sie mindestens 80 Gew.-% der Bestandteile (A) und (B) umfasst, vorzugsweise aus den Bestandteilen (A) und (B) besteht.

**11.** Zusammensetzung nach einem der vorhergehenden Ansprüche, **dadurch gekennzeichnet, dass** sich das Massenverhältnis (A)/(B) von 95/5 bis 5/95, vorzugsweise von 90/10 bis 20/80, bevorzugt 85/15 bis 30/70 bewegt.

12. Zusammensetzung nach dem vorhergehenden Anspruch, **dadurch gekennzeichnet, dass** sich das Massenverhältnis (A)/(B) von 80/20 bis 40/60 bewegt.

13. Verwendung einer Zusammensetzung nach einem der Ansprüche 1 bis 12 als Weichmacherzusammensetzung von Polymeren.

14. Verwendung nach Anspruch 13, **dadurch gekennzeichnet, dass** das Polymer ausgewählt ist aus den Vinylpolymeren wie dem Polyvinylchlorid und den Copolymeren von Vinylchlorid, den Polyurethanen, den Polyestern, den Cellulosepolymeren, den Stärken, den Acrylpolymeren, den Polyacetaten, den natürlichen oder synthetischen Kautschuken, den Polyamiden oder den Mischungen dieser Polymere, vorzugsweise dem Polyvinylchlorid.

15. Verwendung nach Anspruch 13 oder 14 zum Verringern des Migrationsphänomens der Weichmacherzusammensetzung.

16. Verfahren zur Herstellung eines plastifizierten Polymers, umfassend einen Schritt eines Inkontaktbringens der Weichmacherzusammensetzung nach einem der Ansprüche 1 bis 12 mit einem Polymer, wobei das Polymer vorzugsweise ausgewählt ist aus den Vinylpolymeren wie dem Polyvinylchlorid und den Copolymeren von Vinylchlorid, den Polyurethanen, den Polyestern, den Cellulosepolymeren, den Stärken, den Acrylpolymeren, den Polyacetaten, den natürlichen oder synthetischen Kautschuken, den Polyamiden oder den Mischungen dieser Polymere, bevorzugt dem Polyvinylchlorid.

**Claims**

1. Composition that is liquid at room temperature that comprises a mixture:

   - of at least one 1,4:3,6-dianhydrohexitol diester (A); and
   - of at least one compound (B), chosen from the modified fatty acids and the modified fatty acid esters, said compound (B) bearing at least one epoxy and/or acetyl function;

   said liquid composition comprising at least 60% by mass of constituents (A) and (B).

2. Composition according to the previous claim, **characterised in that** at least one compound (B) is a modified fatty acid ester.

3. Composition according to one of the previous claims, **characterised in that** at least one compound (B) is a triglyceride comprising at least one modified fatty acid.

4. Composition according to one of the previous claims, **characterised in that** at least one compound (B) bears at least one epoxy function.

5. Composition according to claim 3 or 4, **characterised in that** at least one compound (B) is a triglyceride of at least one modified fatty acid bearing at least one epoxy function.

6. Composition according to the previous claim, **characterised in that** the triglyceride is an epoxidised soybean oil and/or an epoxidised one of linseed, preferably an epoxidised soybean oil.

7. Composition according to one of the previous claims, **characterised in that** at least one 1,4:3,6-dianhydrohexitol diester (A) is a 1,4:3,6-dianhydrohexitol alkyl diester.

8. Composition according to claim 7, **characterised in that** at least one of the alkyl groups of the 1,4:3,6-dianhydrohexitol ester is a $C_{1-24}$, advantageously $C_{3-15}$, preferably $C_{4-10}$, very preferably $C_{6-9}$, alkyl group.

9. Composition according to one of the previous claims, **characterised in that** at least one 1,4:3,6-dianhydrohexitol diester (A) is an isosorbide diester.

10. Composition according to one of the previous claims, **characterised in that** it comprises at least 80%, by mass, of constituents (A) and (B), preferably consists of the components (A) and (B).

11. Composition according to one of the previous claims, **characterised in that** the mass ratio (A)/(B) ranges from 95/5 to 5/95, advantageously from 90/10 to 20/80, preferably from 85/15 to 30/70.

12. Composition according to the previous claim, **characterised in** this the mass ratio (A)/(B) ranges from 80/20 to 40/60.

13. Use of a composition according to one of claims 1 to 12 as a plasticising composition for polymers.

14. Use according to claim 13, **characterised in that** the polymer is chosen from vinyl polymers such as polyvinyl chloride and copolymers of vinyl chloride, polyurethanes, polyesters, cellulose polymers, starches, acrylic polymers, polyacetates, natural or synthetic rubbers, polyamides or mixtures of these polymers, preferably polyvinyl chloride.

15. Use according to claim 13 or 14 in order to reduce the phenomenon of migration of the plasticising composition.

16. Method for manufacturing a plasticised polymer, comprising a step of placing the plasticising composition according to one of claims 1 to 12 in contact with a polymer, said polymer being advantageously chosen from vinyl polymers such as polyvinyl chloride, polyurethanes, polyesters, cellulose polymers, starches, acrylic polymers, polyacetates, natural or synthetic rubbers, polyamides or mixtures of these polymers, preferably polyvinyl chloride.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0078853 A
- WO 9932427 A
- WO 9945060 A
- WO 2008095571 A1
- US 2387842 A
- WO 2014080151 A1
- WO 2014080152 A1
- EP 2990210 A
- FR 2990210 A1
- WO 9945060 A1
- US 20120214920 A
- WO 2013055961 A1

**Littérature non-brevet citée dans la description**

- **HACHIHAMA et al.** *Technology reports of the Osaka University,* 1953, vol. 3 (72), 191-200